(19) Europäisches Patentamt
European Patent Office
Office européen des brevets

(11) **EP 2 629 087 A2**

(12) **EUROPÄISCHE PATENTANMELDUNG**

(43) Veröffentlichungstag:
**21.08.2013 Patentblatt 2013/34**

(51) Int Cl.:
***G01N 29/02*** *(2006.01)*    ***G01N 29/24*** *(2006.01)*

(21) Anmeldenummer: **12008492.6**

(22) Anmeldetag: **20.12.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.12.2011 DE 102011121867**

(71) Anmelder:
• **Luther, Joachim**
  **38690 Vienenburg (DE)**
• **Technische Universität Clausthal**
  **38678 Clausthal-Zellerfeld (DE)**

(72) Erfinder:
• **Mamaschew, Sergej**
  **D - 38678 Clausthal-Zellerfeld (DE)**
• **Urban, Alexander**
  **38518 Gifhorn (DE)**
• **Vossiek, Martin**
  **D - 90766 Fürth (DE)**
• **Luther, Joachim**
  **D - 83690 Vienenburg (DE)**

(74) Vertreter: **Thiele, Thomas**
  **Pilotystraße 4**
  **80538 München (DE)**

(54) **Verfahren und Messsystem zum Messen einer thermodynamischen Zustandsgröße, insbesondere eines Druckes eines gasförmigen Mediums, und Körper mit integriertem Sensor dafür**

(57) Die Erfindung bezieht sich auf ein Verfahren und auf ein Messsystem zur Messung einer thermodynamischen Zustandsgröße, insbesondere einer Temperatur (T) und eines Drucks (p), oder einer Viskosität eines Mediums (M) innerhalb eines dieses dicht umschließenden Körpers (K), mit im Körper angeordnet zumindest eine Empfänger- und Sendereinrichtung (ES) mit einer Antenne (A1) zum induktiven Einkoppeln eines drahtlos empfangenen Anregungssignals (sa), im Körper (K) angeordnet zumindest einen elektromechanischen Schallwandler (SW) der ausgebildet ist, nach Empfang des Anregungssignals (sa) eine Schallwelle (sp) in das Medium (M) einzukoppeln, wobei der Schallwandler (SW) ausgebildet ist, zumindest eine durch die Schallwelle (sp) erzeugte Kenngröße (sd) zu erfassen und ein von der erfassten Kenngröße (sd) abhängiges Übertragungssignal (sm(sd)) der Empfänger- und/oder Sendereinrichtung (ES) zum drahtlosen Aussenden anzulegen, und mit einer Auswerteeinrichtung (AE), welche eine Sende- und Empfängereinrichtung (SE) zum drahtlosen Empfang eines solchen Übertragungssignals (sm(sd,sT)) und einen Prozessor (C) aufweist, der aus dem empfangenen Übertragungssignal die thermodynamische Zustandsgröße oder die Viskosität des Mediums (M) bestimmt.

Fig. 1

**Beschreibung**

Die Erfindung bezieht sich auf ein Verfahren und auf ein Messsystem zum Messen einer thermodynamischen Zustandsgröße, insbesondere eines Druckes eines gasförmigen Mediums, mit den oberbegrifflichen Merkmalen gemäß Patentanspruch 1 bzw. 5 und auf einen Körper mit integriertem Sensor dafür.

Eine der wichtigsten technischen Aufgaben in der Zeit knapper werdender Energieressourcen ist Energie zu sparen, wo immer es möglich ist. Bekannt ist aus DE 10 2007 027 466 in diesem Zusammenhang ein eigensteifes Isoliersystem für Rohre, das physikalische Gesetzmäßigkeiten des Wärmeflusses ausnutzt. In diesem Isoliersystem wird durch Vakuumtechnik die Wärmeleitfähigkeit eines Isolierkörpers reduziert und damit der Isolierwert deutlich verbessert. Der Vorteil gegenüber konventionellen Isoliertechniken besteht in dem geringeren Platzbedarf bei gleichem Isolierwert. So wird die Dicke der Isolierung annähernd um den Faktor 4 reduziert. Dies wiederum ermöglicht eine deutlich kompaktere Bauweise der Anlagentechnik.

Allgemein bekannt sind Isolierelemente mit einem sogenannten Polystyrolkern (Kern aus "Styropor"), der mit einem glasfaserverstärkten Kunststoffgehäuse (GFK) ummantelt ist. Da das glasfaserverstärkte Kunststoffgehäuse Luft zieht, wird diese Variante in aktiven Systemen eingesetzt, wo mit einer Pumpe immer wieder Luft abgesaugt wird.

Der Aufbau dieser Isolierelemente bzw. Isolierkörper eines derartigen Verbund-Isolier-Systems besteht aus einem vakuumisiertem Kieselsäuregemisch das anschließend in einer metallisierten Polyethylen-Folie verschweißt wird. Bedingt durch die Polyethylenschweißnaht ist eine 100% Gasdichtigkeit des Isolierkörpers in der Regel nicht zu erreichen. Es wird daher mit einem Innendruckanstieg von 1 hPa/Jahr gerechnet. Über 20 Jahre sicherzustellender Lebensdauer gerechnet bedeutet dies eine in der Regel unwesentliche Verschlechterung des Isolierwertes.

Diese Werte sind bei normalen Umgebungsbedingungen ermittelt worden. Extreme Umweltbedingungen können sich jedoch negativ auf die Gasdichtigkeit auswirken, so dass der Innendruck schneller ansteigt und sich damit der Isolierwert deutlich verschlechtert.

Aus Gründen der Qualitätssicherung bzw. der Qualitätskontrolle im eingebauten Zustand ist es daher wichtig den genauen Innendruck eines jeden Isolierkörpers zu kennen bzw. jederzeit zur Überprüfung messen zu können. Dies soll auch möglich sein bei Isolierelementen, die mit einer metallisierten Folie kaschiert sind.

Der Aufbau der bevorzugten Isolierelemente eines derartigen Verbund-Isolier-Systems besteht aus einem verpressten Kern, gemischt aus Kieselsäure, Fasern und Trübungsmittel mit einer Dicke von vorzugsweise aber nicht notwendig 10 mm bis 60 mm. Dieser Kern wird evakuiert und mit einer gasdichten Hülle umschlossen. Optional können in einem weiteren Prozessschritt die Verbund-Isolier-Systeme zur Festigkeitssteigerungen und einer besseren Handhabung, abhängig von den Anforderungen mit einem glasfaserverstärkten Kunststoffgehäuse ummantelt werden. Der Isolierwert dieses Systems ist dabei sehr stark vom Grad der Evakuierung bzw. von der absoluten Luftmenge innerhalb des Verbund-Isolier-Systems abhängig. Im Normalfall werden diese Isolierelemente bis auf einen Innendruck <= 5 hPa evakuiert, um einen geeigneten Isolierwert zu erreichen. Mit steigendem Innendruck verschlechtert sich der Isolierwert gemäß beispielsweise DIN 52612 (DIN: Deutsches Institut für Normung). Eine Verschlechterung des Isolierwerts basiert hierbei auf einem Zustandekommen einer freien Molekularströmung und einem Einsetzen einer Wärmeübertragung durch Konvektion. Der bereits beschriebene Aufbau, und dabei im Speziellen eine neuartige, relativ dickwandige äußere Kunststoffhülle, des Verbund-Isolier-Systems lässt eine direkte Wärmeflussmessung mittels konventioneller Sensoren nicht zu, da diese einen direkten Kontakt zwischen Sensor und Messkopf benötigen.

Die Aufgabe der Erfindung besteht darin, ein Verfahren und ein Messsystem zum Messen einer thermodynamischen Zustandsgröße, insbesondere eines Druckes eines gasförmigen Mediums, und einen Körper mit integriertem Sensor dafür bereitzustellen. Insbesondere soll so ein Sensorsystem bereitgestellt werden zur zerstörungsfreien, insbesondere berührungslosen Erfassung einer thermodynamischen Zustandsgröße, insbesondere einer Wärmeleitfähigkeit, einer Temperatur, eines Drucks oder einer Dichte, eines gasförmigen Mediums oder daraus zur Bestimmung eines aktuellen Wärmeleitwerts eines Isolierkörpers eines derartigen Verbund-Isolier-Systems.

Diese Aufgabe wird gelöst durch das Verfahren zum Messen einer thermodynamischen Zustandsgröße mit den Merkmalen des Patentanspruchs 1, durch ein Messsystem zum Messen einer thermodynamischen Zustandsgröße mit den Merkmalen des Patentanspruchs 5 bzw. durch einen Körper mit integriertem Sensor dafür. Vorteilhafte Ausgestaltungen sind Gegenstand von abhängigen Ansprüchen.

Bevorzugt wird demgemäß insbesondere ein Messsystem zur Messung einer thermodynamischen Zustandsgröße - insbesondere einer Wärmeleitfähigkeit, einer Temperatur, eines Drucks oder einer Dichte - oder zur Messung einer Viskosität eines gasförmigen oder flüssigen Mediums innerhalb eines das Medium abdichtend umschließenden Körpers. Das Messsystem weist dabei auf

- im, insbesondere innerhalb des Körpers angeordnet zumindest eine Empfänger- und/oder Sendereinrichtung mit einer Antenne zum induktiven Einkoppeln eines drahtlos empfangenen Anregungssignals,
- im, insbesondere innerhalb des Körpers angeordnet zumindest einen elektromechanischen Schwinger und/oder Resonator als Schallwandler - insbesondere eine Piezoelementanordnung - der an der Empfänger- und/oder Sendereinrichtung zum Empfang eines solchen Anregungssignals aus der Empfänger- und/oder Sendereinrichtung angekoppelt ist und der ausgebildet ist, nach Empfang eines solchen Anregungssignals eine Schallwelle

- insbesondere eine Ultraschallwelle - in das Medium einzukoppeln,
- zumindest den einen Schallwandler oder innerhalb des Körpers angeordnet einen weiteren Schallwandler, der ausgebildet ist, zumindest eine durch die Schallwelle erzeugte Kenngröße zu erfassen und ein von der erfassten Kenngröße abhängiges Übertragungssignal der Empfänger-und/oder Sendereinrichtung zum drahtlosen Aussenden anzulegen,
- eine Auswerteeinrichtung, welche zumindest eine Empfängereinrichtung - insbesondere eine Sende- und Empfängereinrichtung - mit einer Auswerteeinrichtungs-Antenne zum drahtlosen Empfang eines solchen Übertragungssignals und einen Prozessor aufweist, wobei der Prozessor aus dem empfangenen Übertragungssignal die thermodynamische Zustandsgröße oder die Viskosität des Mediums bestimmt.

Unter dem Körper, der das gasförmige oder flüssige Medium abdichtend umschließt wird ein Körper verstanden, welcher für das Medium so weit technisch möglich oder sinnvoll undurchdringbar ausgebildet ist, so dass das Medium aus dem Körper nicht herausdringen kann. Insbesondere fällt unter ein solches Medium auch Luft, so dass es sich dann bei dem Körper um einen Körper handelt, welcher bei gleichem Medium in der äußeren Umgebung und unterschiedlichen Drücken innerhalb und außerhalb des Körpers als Isolierkörper einsetzbar ist.

Unter dem drahtlosen Aussenden oder Empfangen wird verstanden, dass die entsprechende Sende- oder Empfängereinrichtung eine Antenne aufweist, über welche beim Übertragen eines Signals ein elektromagnetisches, insbesondere magnetisches Impuls- oder Wechselfeld zu einer anderen Antenne einer empfangenden bzw. sendenden Empfänger-und/oder Sendereinrichtung übertragen wird. Unter einer Empfänger- und/oder Sendereinrichtung wird verstanden, dass es sich um eine oder zwei getrennte Vorrichtungen handeln kann, also zum Senden und Empfangen reine Empfängereinrichtungen, reine Sendereinrichtungen oder kombinierte Empfänger- und/oder Sendereinrichtungen verwendet werden können.

In einfacher Ausgestaltung der Auswerteeinrichtung bestimmt ein Prozessor aus dem empfangenen Übertragungssignal die thermodynamische Zustandsgröße oder die Viskosität einfach durch Umwandlung eines diese bereits repräsentierenden Signals in eine weiterverarbeitbare oder auf einer Anzeigeeinrichtung anzeigbare Größe. Dies ist insbesondere dann möglich, wenn bereits eine Vorverarbeitung durch einen weiteren Prozessor erfolgt ist, welcher sich in einer im Körper befindlichen Schaltungsanordnung befindet und welcher eine Auswertung der gemessenen Kenngröße durchführt. Werden nur unverarbeitete Messsignale in dem Übertragungssignal übertragen, kann der Prozessor aber auch zur Datenverarbeitung ausgestaltet oder programmiert sein, welche eine entsprechende Datenverarbeitung durchführt, um die gewünschten Größen zu berechnen.

Unter einem Prozessor werden berechnende Strukturen oder Einrichtungen einschließlich auch softwaregestützter Rechenelemente, aber auch zur Datenverarbeitung verdrahtete Hardwarekomponenten sowie Mischformen verstanden.

Unter innerhalb des Körpers befindlichen Komponenten werden vorzugsweise aber nicht notwendig auch Komponenten verstanden, welche ggf. auch teilweise innerhalb eines Teils einer den Innenraum umgebenden Wandung des Körpers angeordnet sind, solange die Wandung das Medium abdichtend bleibt.

Das Piezoelement, das den Schall erzeugt, kann so über eine induktive oder elektromagnetische Kopplung, drahtlos mit Energie versorgt werden und auf demselben Weg die Abklingkurve übertragen, da sich über die kurzen Entfernungen auf diese Weise relativ viel Energie übertragen lässt und es möglich ist, über die Koppelspule nach einer Anregung des Schwingers seine Abklingkurve durch induktive Kopplung nach außen zu übertragen. Der große Vorteil dieser bevorzugten Lösung besteht darin, dass im Körper gemäß einer besonders einfachen Ausgestaltung nur ein Resonator, zum Beispiel Piezo-Schallwandler sowie ein elektronischer Resonanzkreis unterzubringen sind, wobei die Koppelspule darin als Antenne ausführbar ist. Die eingesetzten Werkstoffe können dadurch auf Metall und Keramik beschränkt werden, was eine hohe Temperaturunempfindlichkeit - systematisch begrenzt nur durch die Curie-Temperatur der Piezokeramik - zur Folge hat. Die Curie-Temperatur von speziellen Bleizirkonat-Titanat (PZT) Kristallen liegt deutlich über 200 °C, von anderen Piezo-Materialien sogar deutlich darüber. Eine vergleichbare Lösung der technischen Aufgabe wäre mit aktiven Halbleiterbauelementen nicht möglich da diese üblicherweise nur für einen Temperaturbereich von -40 °C bis 85 °C spezifiziert sind.

Vorteilhaft ist dabei ein Körper eines solchen Messsystems oder ein solches Messsystem mit im, insbesondere innerhalb des Körpers angeordnet zusätzlich einem Temperatursensor, der ausgebildet ist, eine/die Temperatur des Mediums als weitere Kenngröße zu erfassen. Vorteilhaft ist auch, dabei die erfasste Temperatur als Bestandteil des Übertragungssignals oder eines weiteren Übertragungssignals der oder einer weiteren Empfänger- und/oder Sendereinrichtung zum drahtlosen Aussenden anzulegen.

Somit weist der Körper zwei physikalisch verschiedene Werte erfassende Sensoren auf. Außerdem werden getrennt Druck- und Temperaturmessung mit je eigenen Empfänger- und/oder Sendereinrichtungen ermöglicht, so dass z.B. durch Verwendung verschiedener Signalarten oder Signalfrequenzen gezielt der Schallwandler und der Temperatursensor angeregt oder gezielt Übertragungssignale übertragen werden können. Ermöglicht wird dadurch eine externe Korrekturwertebestimmung, bei der ein Druck korrigiert um einen Einfluss der Temperatur innerhalb des Körpers bestimmt wird.

Besonders vorteilhaft ist auch ein Körper eines solchen Messsystems oder ein solches Messsystem mit

- im, insbesondere innerhalb des Körpers angeordnet zusätzlich einem Temperatursensor, der ausgebildet ist, eine Temperatur des Mediums als weitere Kenngröße zu erfassen und
- im, insbesondere innerhalb des Körpers angeordnet einem Prozessor, der zwischen einerseits dem oder dem weiteren Schallwandler und dem Temperatursensor und andererseits der Empfänger- und/oder Sendereinrichtung eingesetzt ist und der Empfänger- und/oder Sendereinrichtung anzulegen.

Zwar ist eine solche Anordnung mit einer Prozessoranordnung innerhalb des Körpers nur bis zu einer begrenzten maximalen Umgebungstemperatur einsetzbar, bildet jedoch trotzdem eine weitere bevorzugte Ausgestaltung. Der Vorteil eines solchen Mikroprozessors besteht darin, dass er sich beim Empfänger identifizieren kann und/oder z.B. seine für die Druckmessung erforderlichen Kalibrierdaten mitsendet.

Insbesondere kann dabei das Übertragungssignal aus der um einen Temperatureinfluss korrigierten erfassten Kenngröße gebildet werden. Das Übertragungssignal kann somit mit dem Übertragungssignal z.B. einen bereits korrigierten Druckwert übertragen, der aus dem Körper heraus zu der extern angeordneten Auswerteeinrichtung übertragen wird, so dass diese ohne spezielle Korrekturmaßnahmen die Messwerte aus verschiedenen Körpern direkt verarbeiten kann.

Vorteilhaft ist auch ein solcher Körper eines solchen Messsystems oder ein solches Messsystem mit im, insbesondere innerhalb des Körpers angeordnet einem/dem Prozessor, der zwischen einerseits zumindest dem oder dem weiteren Schallwandler und optional zusätzlichen Komponenten und andererseits der Empfänger- und/oder Sendereinrichtung eingesetzt ist und ausgebildet ist, entweder das Übertragungssignal aus der zumindest einen erfassten Kenngröße und zusätzlich zumindest einem lokal gespeicherten Parameter zu erzeugen oder das Übertragungssignal aus der zumindest einen erfassten und durch den Prozessor verarbeiteten Kenngröße und optional zumindest einem zusätzlich lokal gespeicherten Parameter zu erzeugen und das Übertragungssignal der Empfänger- und/oder Sendereinrichtung anzulegen.

Bei der lokal gespeicherten Kenngröße kann es sich um Korrekturparameter wie z.B. Kalibrationsdaten handeln, welche dem Prozessor z.B. eine Berechnung einer temperaturabhängigen Korrektur des Druckmesswerts ermöglichen. Unter dem Erzeugen des Übertragungssignals kann verstanden werden, dass die Kenngröße und die Parameter mit einer physikalisch übertragungssicheren Codierung, z.B. einem Manchester-Code als eigenständige Größen übertragen werden oder dass die Kenngröße und die Parameter miteinander verarbeitet werden und ein daraus neu entstandenes Übertragungssignal übertragen wird. Letzteres kann insbesondere eine bereits korrigierte Kenngröße ausbilden.

Dieser Körper oder dieses Messsystem wird bevorzugt mit im, insbesondere innerhalb des Körpers angeordnet einer Speichereinrichtung, in welcher als zumindest ein gespeicherter Parameter einer oder mehrere Korrekturwerte, insbesondere Temperaturkorrekturwerte, Kalibrationsdaten, eine Identifikationsnummer und/oder sonstige Sensordaten auslesbar gespeichert sind.

Insbesondere wenn nur eine Identifikationsnummer des Körpers, des Prozessors oder des Schallwandlers gespeichert ist, kann diese dann zusammen mit dem als Kenngröße erfassten Druckwert im Übertragungssignal übertragen werden, um später in der externen Auswerteeinrichtung eine Korrektur mittels dort gespeicherten Temperaturwerten für diesen Körper und seine integrierten Komponenten zu ermöglichen. Im Fall einer Identifikationsnummer ist eine Zuordnung des Wertes zu einem bestimmten Körper aus einer Vielzahl bereits eingebauter Körper zur zeitlich versetzt späteren Überprüfung möglich.

Der Temperaturwert kann dazu sowohl ein aus dem Körper übertragener Wert als auch ein in der Umgebung gemessener Temperaturwert sein. Ein der Umgebung gemessener Temperaturwert kann beispielsweise dann verwendet werden, wenn der Körper sich ausreichend lange in einer solchen Umgebung befindet, dass sein Innenraum und seine integrierten Komponenten die Umgebungstemperatur angenommen haben.

Vorteilhaft ist auch ein solcher Körper oder ein solches Messsystem, bei dem die zumindest eine Antenne der Empfänger- und/oder Sendereinrichtung um den Schallwandler und / oder um mit dem Schallwandler innerhalb des Körpers verbundene Komponenten gewickelt ist.

Eine solche Anordnung ist besonders platzsparend. Wenn Komponenten wie die Empfänger- und/oder Sendereinrichtung oder ein Prozessor innerhalb des Körpers an dessen Wandung oder teilweise in dessen Wandung integriert angeordnet sind, so ist eine darum gewickelte Spule auch einfach parallel neben der Wandung anordbar in einer gut definierten Position, welche eine eindeutige und gute Signalübertragung nach außen ermöglicht. Alternativ können aber auch Spulen flächig, insbesondere spiralförmig angeordnet sein.

Umsetzbar ist auch ein Körper eines Messsystems oder ein Messsystem, bei dem der Schallwandler statt teurer Keramiksensoren als ein Stimmgabelquarz, insbesondere Uhrenquarz ausgebildet ist und insbesondere die Auswerteeinrichtung und/oder der Prozessor für die Auswertung an ein hochgenaues Zeitnormal gekoppelt ist mit einer Zeitstabilität höher als der des Stimmgabelquarzes.

Bei dem Körper soll es sich insbesondere um einen Isolierkörper gemäß DE 10 2007 027 466 handeln, deren Offenbarung hiermit mit eingeschlossen wird. Insbesondere umsetzbar ist auch ein Körper eines solchen Messsystems oder in einem solchen Messsystem, wobei der Körper als ein Isolierkörper eines Verbund-Isolier-Systems im Innenraum ein vakuumisiertes Kieselsäuregemisch aufweist, das von einer metallisierten Schicht, insbesondere metallisierten Polyethylen-Folie umschlossen ist.

Körper und Messanordnung sind insbesondere anwendbar auf den Aufbau besonders bevorzugter Verbund-Isolier-Systeme, die vorzugsweise neben einem Isolierkern, insbesondere einem Kieselsäuregemisch, aus einer metallisierten PE-Folie (PE: Polyethylen) und einem faserverstärkten Kunststoff-Gehäuse bestehen. Bereitgestellt wird dazu insbesondere ein miniaturisierter, passiver bzw. batterieloser, drahtloser Sensor, der in die Isolierkörper solcher Verbund-Isolier-Systeme integriert wird, und eine tragbare Auswerteeinrichtung mit einem Lesegerät zum bevorzugt berührungslosen Auslesen des Sensors.

Neben der Auswahl eines vorzugsweise optimalen Sensorprinzips, werden vorzugsweise auch eine geeignete drahtlose Energieversorgung und eine drahtlose Schnittstelle zur Signal- bzw. Datenübertragung bereitgestellt. Ein Einsatz ist sogar möglich unter den Randbedingungen, dass die Isolierelemente einem sehr großen Temperaturbereich ausgesetzt werden, die angestrebte Einsatz- bzw. Lebensdauer der Isolierelemente mit 20 Jahren sehr groß ist und dass die Isolierelemente mit einer metallisierten Folie kaschiert sind. Vorteilhaft bei dem Sensorprinzip ist ferner auf ein vorteilhaft geringer Stromverbrauch und eine geringe Baugröße. Abmessungen sind insbesondere auch im Sub-Zentimeter- bis Zentimeter-Bereich möglich.

Insbesondere der bereits beschriebene Aufbau und dabei im Speziellen eine neuartige, relativ dickwandige äußere Kunststoffhülle der Verbund-Isolier-Systeme lässt eine direkte Wärmeflussmessung mittels der bevorzugten Verfahrensweise und Messsystem anstelle konventioneller Sensoren zu, da nun kein direkter Kontakt zwischen Sensor und Messkopf benötigt wird. Dies macht insbesondere die Anwendung eines Sensors möglich, der drahtlos sowohl mit Energie versorgt werden, als auch die Informationen an die Ausleseeinheit übermitteln kann.

Bereitgestellt werden so verschiedene drahtlose energieautarke piezoakustische Schwinger zur Messung thermodynamischer Zustandsgrößen und der Viskosität von Gasen und Flüssigkeiten. Durch die vorgestellte Anordnung können Rohdaten eines Schallwandlers über eine gewisse Distanz und auch durch geschlossene Behälter hindurch übertragen werden. Während die Reichweite von der üblichen exponentiellen Abnahme magnetischer Felder abhängt, unterliegt die Übertragungsqualität der induktiven Kopplung im letzten Fall den gewöhnlichen Restriktionen einer Metallisierung des Behälterwerkstoffes. Gegenüber kabelgeführten Sensoren lässt sich auf Durchführungen und entsprechende Dichtungen gänzlich verzichten, womit auch mechanische und hermetische Schwachstellen vermieden werden. Weitere Vorteile ergeben sich durch die geringe Anzahl elektronischer Komponenten, schnelle Montage, geringe Kosten und vor allem durch das Einbringen von diskreten elektronischen Bauteilen, was bei Ausgestaltungen ohne Halbleiterkomponenten den Einsatz bei hohen Temperaturen bis hin zur Curie-Temperatur des verwendeten piezoeffektiven Werkstoffes ermöglicht.

Ein Ausführungsbeispiel und Modifikationen werden nachfolgend anhand der Zeichnung näher erläutert. Dabei verweisen in verschiedenen Figuren untereinander gleiche Bezugszeichen auf jeweils gleiche oder gleich wirkende Komponenten, Funktionen oder Verfahrensabläufe, so dass hinsichtlich deren Beschreibung auch die Beschreibung weiterer der Figuren gilt. Es zeigen:

Fig. 1     teilweise geschnitten dargestellt einen Körper mit einem integrierten Sensor und weitere Komponenten eines Messsystems zum Bestimmen einer thermodynamischen Zustandsgröße in einem Innenraum des Körpers, insbesondere in einem von dem Körper eingeschlossenen Mediums,

Fig. 2     eine Vielzahl von Abklingkurven nach Hüllkurvendemodulationen von mit der Zeit abklingenden Schwingungen eines von einem Schallfeld oder einer Schallwelle angeregten Schallwandlers bei verschiedenen Druckbedingungen in dem Medium,

Fig. 3     ein Integral über eine solche Hüllkurve,

Fig. 4     eine gegenüber Fig. 1 modifizierte Ausgestaltung,

Fig. 5     ein Ersatzschaltbild zum Veranschaulichen eines Schaltungsprinzips einer solchen Ausgestaltung und Schwingungskurven in einer solchen Anordnung,

Fig. 6     ein beispielhaft gemessenes Spannungs-Zeitdiagramm,

Fig. 7 einen in einer solchen Schaltung beispielhaft einsetzbaren Stimmgabelquarz,

Fig. 8 eine modifizierte Ausgestaltung einer beispielhaften Sensoreinrichtung mit einem Resonator,

Fig. 9 eine Ausgestaltung einer noch anderen Sensoreinrichtung mit einem Resonator,

Fig. 10 ein Schaltungsdiagramm verschiedener Komponenten und Funktionselemente eines bevorzugten Messsystems und

Fig. 11 eine beispielhafte Antennenausgestaltung.

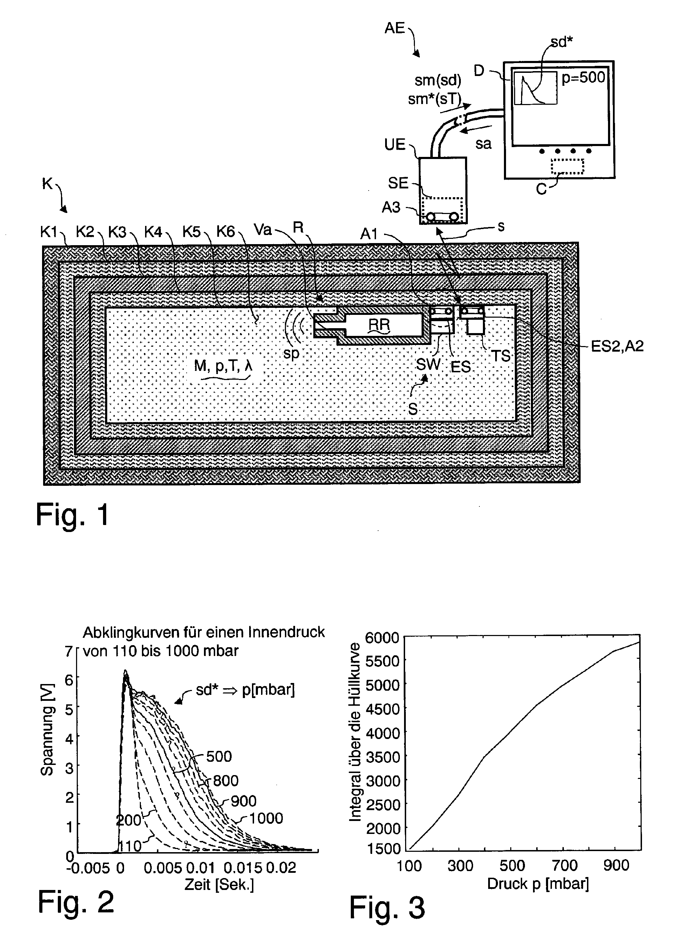

Fig. 1 zeigt schematisch eine Schnittansicht eines besonders bevorzugten Körpers K, welcher ein gasförmiges oder flüssiges Medium M abdichtend umschließt. Unter gasförmig oder flüssig ist dabei auch ein so genanntes fluides Medium zu verstehen.

Zur Messung einer thermodynamischen Zustandsgröße oder einer Viskosität des Mediums M sind außerdem Komponenten eines Messsystems dargestellt. Das Messsystem besteht dabei aus einer Auswerteeinrichtung AE, welche eine Übertragungseinrichtung UE zum drahtlosen Senden und/oder Empfangen von Signalen ausgebildet ist. Die Signale werden dabei insbesondere mittels elektromagnetischer oder magnetischer Feldvariationen übertragen. Außerdem weist das Messsystem eine Vielzahl von Sensoreinrichtungen S auf, wobei jeweils eine solche Sensoreinrichtung S in dem Körper K eingesetzt ist. Dabei steht die Sensoreinrichtung S mit dem Medium M in Verbindung und weist eine Empfänger- und/oder Sendereinrichtung ES auf, welche ausgebildet ist, Signale mit der Übertragungseinrichtung UE der Auswerteeinrichtung AE auszutauschen. Insbesondere ist das Messsystem derart ausgestaltet, dass von der Auswerteeinrichtung AE Energie über die drahtlose Schnittstelle zu der Sensoreinrichtung übertragen wird und dass von der Sensoreinrichtung erfasste Messwerte oder daraus gebildete Übertragungssignale s zu der Übertragungseinrichtung UE der Auswerteeinrichtung AE übertragen werden.

Gemäß einer besonders bevorzugten Ausgestaltung handelt es sich bei dem Körper K um einen Isolationskörper, welcher als Dämmelement einsetzbar ist. Gemäß eines skizzierten und besonders bevorzugten Aufbaus besteht der Körper K außenseitig aus einer mit Glasfaser verstärkten Kunststoffhülle K1. Die Kunststoffhülle K1 umgibt eine Polyethylen-Hülle K2. Die Polyethylen-Hülle K2 umgibt eine Aluminium-Hülle K3. Die Aluminium-Hülle K3 umgibt eine weitere Polyethylen-Hülle K4. Die weitere Polyethylen-Hülle K4 umgibt einen Innenraum K6 des Körpers K. Je nach Ausgestaltung weist der Innenraum K6 einen gegenüber normalen Druckbedingungen vorzugsweise sehr niedrigen Innendruck, idealerweise ein Vakuum, auf. In der Praxis werden aber aus Fertigungsgründen und wirtschaftlichen Gründen auch Körper K eingesetzt, bei denen sich im Innenraum K6 ein anderes Medium als restliche Luft befindet. Bei einem solchen Medium kann es sich insbesondere um Gase oder Flüssigkeiten handeln. Insbesondere kann im Innenraum K6 auch ein vakuumisiertes Kieselsäuregemisch eingeschlossen sein, in dem sich das Medium M befindet.

Insbesondere bei Körpern K, welche für Isolierzwecke eingesetzt werden, ist von großer Bedeutung, ob ein im Innenraum K6 befindlicher Druck p entsprechend der Vorgaben eingehalten wird. Da der Innenraum K6 von dem Körper K abdichtend umschlossen ist, ist eine Messung nur indirekt von außen her durch die Wandung des Körpers K hindurch möglich, wenn durch die Wandung führende Drähte oder Leiter vermieden werden sollen. Entsprechend wird die Sensoreinrichtung S in dem Innenraum K6 des Körpers K angeordnet, um drahtlos mittels des Übertragungssignals s Leistung von außerhalb zu empfangen und in umgekehrter Richtung Messwerte oder Messsignale nach außen zu übertragen.

Die in Fig. 1 dargestellte Sensoreinrichtung S umfasst eine Empfänger- und Sendereinrichtung ES, welche insbesondere eine Antenne A1 aufweist. Die Antenne A1 kann aus einer oder mehreren Wicklungen in Art einer Spule, insbesondere parallel zur Wandung des Innenraums K6 angeordnet sein. Über die Antenne A1 empfangene Leistung wird durch die Empfänger- und Sendereinrichtung ES an einen elektromechanischen Schallwandler SW angelegt. Der Schallwandler SW setzt ein sich zeitlich veränderndes elektrisches Signal, welches über die Antenne A1 angelegt wird, in eine mechanische Schwingung um, welche als Schallwelle bzw. Schallfeld in das Medium M übertragen wird. Bei dem Schallwandler SW kann es sich insbesondere um ein piezoelektrisches Material handeln.

Bevorzugt überträgt der Schallwandler SW die mechanische Schwingung nicht direkt in das Medium, sondern an einen Resonator R, welcher eine Verstärkung der mechanischen Schwingung bzw. der durch den Schallwandler SW erzeugten Schallwelle erzeugt. Ein beispielhaft dargestellter solcher Resonator R besteht aus einem zylindrischen Körper, an dessen geschlossener Rückwand der Schallwandler SW angesetzt ist oder in dessen Rückwand der Schallwandler SW eingearbeitet ist. Am gegenüberliegenden Ende ist in einer Stirnseite des Resonators eine Öffnung ausgebildet, beispielsweise in Art eines Zylinders mit verringertem Umfang, aus welcher die eigentliche Schallwelle sp in das Medium M austritt. Insbesondere ist ein solcher Resonator R nicht auf einen Körper mit einem zylindrischen Resonanzraum RR beschränkt.

Die Übertragung von Schallwellen setzt eine Anwesenheit von Masseteilchen voraus, welche einen Schallimpuls weiterleiten. Als bevorzugte Ausführungsvariante wird daher ein sogenannter Helmholtzresonator als der primäre Resonator R verwendet. Ein Helmholtzresonator besteht für gewöhnlich aus einer schmalen Öffnung mit einem Anregevolumen Va des Resonators R und einem deutlich größeren Resonanzraum. Wird das Luftvolumen im engen Anregevolumen Va in Schwingung versetzt, so wird der Schallimpuls in den Resonanzraum weitergeleitet und versetzt diesen ebenfalls in Schwingung. Solche Resonatoren R können durch eine geeignete Wahl der Abmessungsverhältnisse von Öffnung, Länge und Durchmesser auf bestimmte Resonanzfrequenzen eingestellt werden. Prinzipiell ist ein solcher Schallwandler SW auch ohne Einsatz eines solchen Resonators R verwendbar.

Abhängig von dem Druck p des Mediums M durchläuft die Schallwelle sp das Medium M. Nach einer Reflektion von beispielsweise einer gegenüberliegenden Wandung des Innenraums K6 kommt eine reflektierte Schallwelle zurück in den Resonator R und darüber in den Schallwandler SW. Die Eigenschaften der reflektierten Schallwelle hängen dabei direkt von physikalischen Parametern, insbesondere thermodynamischen Zustandsgrößen wie dem Druck p des Mediums M ab. Entsprechend wird aus der vom Schallwandler SW erfassten reflektierten Schallwelle ein elektrisches Signal erzeugt, welches über die Antenne A1 als Übertragungssignal s zu der Übertragungseinrichtung UE der Auswerteeinrichtung AE übertragbar ist. Diesem Übertragungssignal ist entnehmbar, unter welchen physikalischen Bedingungen sich das Medium M im Innenraum K6 des Körpers K befindet. Wegen der Metallisierung der Außenhülle des Körpers K als Isolierelement erfolgt eine Energiezufuhr zur Anregung eines Schallwandlers und eine Auskopplung eines Sensorsignals vorzugsweise durch eine induktive Kopplung.

Bei einer Bestimmung einer Wärmeleitfähigkeit λ besteht ein Zusammenhang zwischen dem Druck innerhalb eines Isolierelements und dessen Wärmeleitfähigkeit. Mit steigendem Innendruck verschlechtert sich der Isolierwert. Die Verschlechterung des Isolierwerts wird bei nicht hinreichender Evakuierung durch die Zunahme der freien Molekularströmung und einem Einsetzen der Wärmeübertragung durch Konvektion verursacht. Da die Übertragung von Schall ebenfalls direkt von der vorhandenen Luftmenge bzw. dem vorhandenen Druck p abhängt, werden hier vorzugsweise mehrere Kenngrößen einer Schallübertragung bzw. eines Resonanzvorgangs als Sensoreffekt ausgenutzt.

Kritisch bei derartigen Anordnungen können sich weitere thermodynamische Zustandsgrößen auswirken, wie insbesondere eine Temperatur T des Mediums M. Abhängig von Änderungen der Temperatur T innerhalb des Mediums M ändern sich auch messbaren Auswirkungen des Drucks p. Daher weist die dargestellte Anordnung beispielsweise eine weitere Empfänger-und Sendereinrichtung ES2 mit einer weiteren Antenne A2 auf. Diese Empfänger- und Sendereinrichtung ES2 ist an einen Temperatursensor TS gekoppelt, welcher die Temperatur T des Mediums M erfasst und ein entsprechendes Übertragungssignal s an die Übertragungseinrichtung UE der Auswerteeinrichtung AE überträgt. Vorzugsweise wird auch der Temperatursensor TS über ein von der Übertragungseinrichtung UE empfangenes Übertragungssignal s mit Leistung versorgt.

In Reaktion auf die Aussendung eines Anregungssignals sa von der Auswerteeinrichtung AE über die Übertragungseinrichtung UE und das Übertragungssignal s in den Körper werden durch dessen Komponenten somit zwei Übertragungssignale s erzeugt, welche von den beiden Antennen A1, A2 zu der Übertragungseinrichtungs-Antenne A3 übertragen werden. Dabei handelt es sich um ein von der erfassten Kenngröße sd druckabhängiges Übertragungssignal sm(sd) bzw. um ein von der erfassten Temperatur T als weiterer erfasster Kenngröße abhängiges Übertragungssignal sm*(sT). Bei der dargestellten Ausgestaltung werden diese Übertragungssignale sm(sd), sm(sT) durch einen Prozessor C in der Auswerteeinrichtung AE verarbeitet, um den in dem Körper K herrschenden Druck p als der zu bestimmenden thermodynamischen Zustandsgröße zu ermitteln. Der Druck kann dann beispielsweise auf einer Anzeigeeinrichtung D der Auswerteeinrichtung AE angezeigt werden, wie beispielsweise in Form der Angabe p = 500.

Optional kann eine solche Anzeigeeinrichtung D aber auch genutzt werden, um bestimmte Kenngrößen oder Zwischenergebnisse der Bestimmung der gewünschten thermodynamischen Zustandsgröße anzuzeigen, wie dies in Fig. 1 skizziert ist. Beispielsweise ist auf der Anzeigeeinrichtung D eine Abklingkurve sd* einer Schwingung des Schallwandlers SW aufgrund des diesen anregenden Schallfeldes bzw. der Schallwelle sp dargestellt.

Diese Abklingkurve sd* ist charakteristisch für einen ganz bestimmten in dem Körper K herrschenden Druck p. Da mit zunehmendem verbleibenden Druck p im Innenraum K6 des Körpers K auch ein Einfluss der Temperatur T auf die Abklingkurve sd* Einfluss zunimmt. Bei der Auswertung des Übertragungssignals kann die Fläche der Einhüllenden als Maß für die Änderung eines Druckes bzw. einer Temperatur genommen werden. Der deutlich unterschiedliche Verlauf der Abklingkurven für verschiedene Drücke p ist gut erkennbar. Gut erkennbar ist in Fig. 2 der deutlich unterschiedliche Verlauf der Abklingkurven für verschiedene Drücke p. Eine Bestimmung des Drucks p innerhalb eines solchen Körpers K kann somit bereits auf einfache Art und Weise durch einen Vergleich der jeweils gemessenen Abklingkurve sm(sd) mit einer Vielzahl von Musterkurven durchgeführt werden. Die Bestimmung einer relativen Druckänderung ist aus der Abklingkurve sd ohne Temperaturausgleich insbesondere dann möglich, wenn der zu untersuchende Körper K bei beiden Druckessungen identischer Temperatur ausgesetzt ist, z. B. bei Qualitätsprüfungen. Zur Berücksichtigung einer Temperaturänderung wird insbesondere auch die Abklingkurve sT mit einbezogen.

Bevorzugt wird somit die Anregung des Luftvolumens über einen Piezoschwinger realisiert, sowie die sich ausbildende Resonanz über eben jenen Schwinger oder einen weiteren Schallwandler wieder zu erfasst. Der Resonanzraum ist vorzugsweise über kleine Öffnungen zum Vakuumpaneel hin offen, damit derselbe Druck im Paneel und im Resonator R vorherrscht. Technisch ausgenutzt wird dabei, dass die Abklingdauer des Resonators R nach einer Anregung direkt abhängig vom vorherrschenden Luftdruck bzw. der vorhandenen Molekülanzahl ist und der Verlauf eines Ausschwingvorgangs daher Aussagen über den Wärmeleitwert des Paneels ermöglicht.

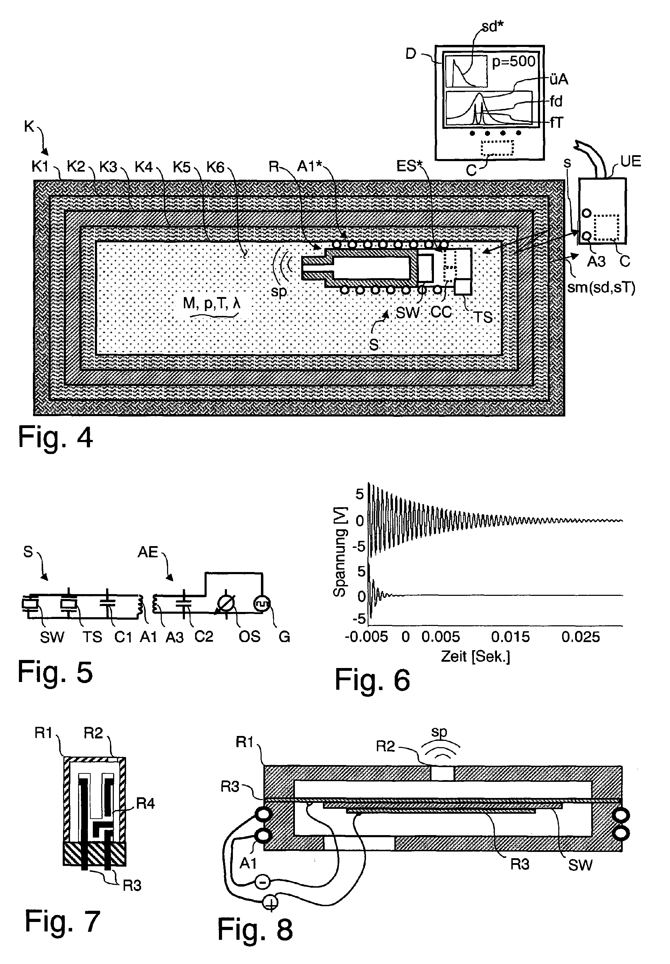

Um das Konzept zu überprüfen wurden bereits erste Laborversuche mit einem evakuierbaren Helmholtzresonator durchgeführt, welcher rein beispielhaft für eine Resonanzfrequenz von 40 kHz ausgelegt und über einen 19 mm durchmessenden Luftultraschallwandler bei eben dieser Frequenz angeregt wurde. Dabei wurde das Luftvolumen mit einem einzigen Ausschlag des Piezoelements angeregt und eine Abklingkurve in Art der oberen Kurve aus Fig. 6 für einen Innendruck von 500 mbar aufgezeichnet.

Die Abklingkurve wurde anschließend Hüllkurven-demoduliert, soll heißen gleichgerichtet und tiefpassgefiltert.

Fig. 2 zeigt ein Ergebnis einer Vielzahl von Hüllkurvendemodulationen verschiedener solcher Abklingkurven sd* für verschiedene Innendrücke, das heißt Drücke p im Innenraum K6 unter Annahme einer jeweils gleichen Temperatur T. Der Resonator R wurde bei einem ersten beispielhaften Laborversuch evakuiert, wobei die angegebenen Zahlenwerte lediglich beispielhaft sind.

Die dabei angegebenen Zeitdauern und Drücke bzw. Spannungen sind lediglich beispielhaft zu sehen und hängen insbesondere von den verwendeten Komponenten zum Bau des Schallwandlers SW, des Temperatursensors TS und eines eventuellen Resonators R ab. Insbesondere durch den Prozessor C der Auswerteeinrichtung AE kann vorteilhaft eine Integration durchgeführt werden, um ein Integral über die Hüllkurve der in Fig. 2 dargestellten Spannungen zu bilden. Ein Ergebnis eines solchen Integrals über die Hüllkurve ist über dem Druck p dargestellt in Fig. 3 skizziert. Auch dabei sind die angegebenen Zahlenwerte lediglich rein beispielhaft zu sehen.

Als ersten Ansatz auf der Suche nach charakteristischen Eigenschaften der Hüllkurven wurde die Fläche unter den Kurven ermittelt und über dem Druck p aufgetragen. Es ergab sich ein nahezu linearer Zusammenhang zwischen der Fläche unter den Abklingkurven und dem Luftdruck im Inneren des Resonators R. Dieser Zusammenhang ist in Fig. 3 veranschaulicht.

Bei der Kalibrierung eines Sensors kann der temperaturabhängige Anteil $\Delta f_T(T)$, der druckabhängige Anteil $\Delta f_p(p)$ und das konstante Offset $f_0 T_0,p_0)$ für eine Referenztemperatur $T_0$ und einen Referenzdruck $p_0$ der beobachteten Kenngröße $f(T,p)$, z. B. Resonanzfrequenz, Dämpfung, Impedanz und sonstige abhängige physikalische Größen des Sensors aufgenommen werden. Bei zwei unterschiedlich empfindlich reagierenden Sensoren in Art des Schallwandlers SW und des Temperatursensors TS ergeben sich folgende Kennlinien:

$$f_1(T,p) = f_{10}(T_0,p_0) + \Delta f_{1T}(T) + \Delta f_{1p}(p)$$

$$f_2(T,p) = f_{20}(T_0,p_0) + \Delta f_{2T}(T) + \Delta f_{2p}(p).$$

Dabei entspricht f1 dem ersten der Frequenzanteile fd, welcher insbesondere für einen Druckwert steht, und f2 dem zweiten der Frequenzanteile fT, welcher insbesondere für einen Temperaturwert steht.

Ist der druckabhängige Teil des Sensors TS vernachlässigbar ($\Delta f_{2p}(p) \approx 0$) und das Offset $f_{20}(T_0,p_0)$ bekannt, so lässt sich aus der gemessenen Kenngröße $f_2(T_s,p_s)$ direkt auf den temperaturabhängigen Anteil $\Delta f_{2T}(T_s)$ schließen:

$$\Delta f_{2T}(T_s) = f_2(T_s,p_s) - f_{20}(T_0,p_0)$$

Da der Verlauf des temperaturabhängigen Anteils $\Delta f_{2T}(T)$ aus den Kalibrierdaten abgeleitet werden kann, ist damit auch die vorherrschende Temperatur $T_s$ bestimmt.

Die derart ermittelte Temperatur $T_s$ kann zur Bestimmung des temperaturabhängigen Anteils $\Delta f_{1T}(T_s)$ der Kenngröße des Sensors S1 genutzt werden. Mit dem bekannten Offset $f_{10}(T_0,p_0)$ und der gemessenen Kenngröße selber $f_1(T_s,p_s)$ lässt sich der druckabhängige Anteil $\Delta f_{1p}(p_s)$ ermitteln:

$$\Delta f_{1p}(p_s) = f_1(T_s,p_s) - f_{10}(T_0,p_0) - \Delta f_{1T}(T_s)$$

Da der Verlauf des druckabhängigen Anteils $\Delta f_{1d}(d)$ aus den Kalibrierdaten abgeleitet werden kann ist damit auch der vorherrschende Druck $d_s$ bestimmt.

Fig. 4 zeigt eine alternative Ausgestaltung eines solchen Körpers K bzw. der Sensoreinrichtung S. Soweit gleiche Bezugszeichen verwendet werden, wird auch auf die Ausführungen zu den übrigen Figuren verwiesen. Dargestellt ist eine Sensoreinrichtung S mit einer modifizierten Empfänger- und Sendereinrichtung ES* und einer modifizierten Antenne A1*. Bei dieser bevorzugten Ausgestaltung ist die Antenne A1* um den Sensor oder Komponenten des Sensors herum gewickelt, um so einerseits raumsparend und andererseits mit einer relativ großen Querschnittfläche angeordnet werden zu können.

Außerdem weist diese Anordnung beispielhaft nur eine einzige Antenne A1* auf, welche zur Übertragung des Übertragungssignals sm(sd, sT) dient, in dem sowohl Signalanteile der Messung des Schallwandlers SW als auch der Messung des Temperatursensors TS enthalten sind. Die Empfänger- und Sendereinrichtung ES* legt somit die Ausgangssignale beider Sensorkomponenten an die Antenne A1* an. Umgekehrt wird auch ein Anregungssignal, welches von der Antenne A1* empfangen wird, über die Empfänger- und Sendereinrichtung ES* sowohl zur Energieversorgung und Anregung des Schallwandlers SW als auch zur Energieversorgung des Temperatursensors TS verwendet.

Gemäß dieser bevorzugten Ausgestaltung weist die Sensoreinrichtung S zusätzlich einen Prozessor CC auf. Somit ist im Vergleich zu Fig. 1, welcher innerhalb des Körpers K keine aktive Signale verarbeitende Komponente integriert ist, bei der Ausgestaltung gemäß Fig. 4 ein Prozessor oder eine Verschaltung von Komponenten vorgesehen, welche eine Datenverarbeitung oder Datenmanipulation ermöglichen. Insbesondere können mit der Datenverarbeitung sensorinterne Daten, z.B. Sensor-ID, digitaler Temperaturwert, vorab erzeugte Kalibrationsdaten für die drahtlose Übertragung in einer bestimmten Reihenfolge nach Protokoll zusammengestellt und mit einer taktabhängigen Kodierung versehen werden. Das Taktsignal der Codierung sollte dabei vom Schwinger erzeugt werden, womit auch die druckabhängigen Frequenzänderungen im Taktsignal automatisch mit Übertragen werden. Insbesondere führt die sensorinterne Speicherung der Kalibrationsdaten zu einer Auswertung unabhängig vom Lesegerät bzw. einer externen Datenbank. Neben einer aktiven Zusammenfassung der gemessenen Kenngrößen kann insbesondere gemäß einer komplex ausgestalteten Variante eines solchen Prozessors sogar eine Datenverarbeitung vorgesehen werden, bei welcher durch den Prozessor CC bereits eine Kompensation eines Einflusses der Temperatur T, welche vom Temperatursensor TS erfasst wird, in dem gemessenen Signal des Schallwandlers SW durchgeführt wird, so dass das Übertragungssignal sm bereits einen bezüglich der Temperatur T kompensierten Druckwert umfasst.

Diese Abklingkurve sd* ist charakteristisch für einen ganz bestimmten in dem Körper K herrschenden Druck p. Da mit zunehmendem verbleibenden Druck p im Innenraum K6 des Körpers K auch ein Einfluss der Temperatur T auf die Abklingkurve sd* Einfluss zunimmt, sind als weitere informative Größen auf der Anzeigeeinrichtung D eine Darstellung von Frequenzanteilen fd der durch die Schallwelle sp erzeugten Kenngröße und Frequenzanteile fT der durch die Temperatur T erzeugten Kenngröße abgebildet. Bei der Auswertung des Übertragungssignals, wie in Fig. 6 oben dargestellt, kann die Fläche aus der Einhüllenden in Fig. 2 als Maß für die Änderung eines Druckes bzw. einer Temperatur genommen werden. Der unterschiedliche Verlauf der Abklingkurven für verschiedene Drücke p ist gut erkennbar.

Bei der Auswahl des Schallwandlers SW und des Temperatursensors TS sowie weiterer Komponenten der Empfänger- und Spendereinrichtungen SE, SE2 bzw. Sende- und Empfängereinrichtung SE ist dabei vorzugsweise darauf zu achten, dass die Frequenzanteile fd, fT innerhalb einer Übertragungsfunktion üA der induktiven Kopplung liegen.

Fig. 5 zeigt beispielhaft Schaltungskomponenten einer bevorzugten Ausgestaltung zum Ausweiten der Anwendungsgebiete derartiger resonanter Schwinger mit der drahtlosen Kopplung zwischen dem Schallwandler SW als Schwinger und der Übertragungseinrichtung UE der Auswerteeinrichtung AE. Dabei gewährleistet eine induktive Kopplung die Daten- und Energieübertragung. Durch Einspeisen einer rechteckigen Wechselspannung mit einem Generator als Spannungsquelle, insbesondere Rechteck-Wechselspannungsquelle 1 lässt sich die benötigte Energiemenge über induktiv gekoppelte Schwingkreise zum Anregen der Sensorelemente einsetzen. In der Übertragungseinrichtung UE wird der Schwingkreis gebildet aus einem vorgeschalteten Anpassungsnetzwerk mit einer Spule als der Antenne A3 und mit einem Kondensator C2. In dem Körper K wird der Schwingkreis gebildet aus einer Spule als der Antenne A1, A1* und einem Kondensator C1. Ein Abschalten des Generators führt zum Ausschwingen des Schallwandlers SW und optional des Temperatursensors TS, insbesondere piezoeffektiven Schwingern, was wiederum durch eine Rückinduktion über ein Wechselfeld in einem Oszilloskop OS der Auswerteeinrichtung AE aufgezeichnet und darstellbar ist. Die Dimensionierung dieser LC-Schwingkreise wird so umgesetzt, dass sich die Frequenzanteile dieser piezoeffektiven Sensorschwinger innerhalb der Übertragungsfunktion der induktiven Kopplung der beiden Antennen A1, A3 befinden. Ein typischer Zeitverlauf dazu ist in Fig. 6 dargestellt. Im oberen Teil von Fig. 6 ist das Ausschwingen des Sensors und im unteren Teil ist das Ausschwingen des LC-Schwingkreis zu sehen. Die üblicherweise niedrige Güte eines realen LC-Schwingkreises gegenüber piezoeffektiven Schwingern ermöglicht die Übertragung mehrerer Resonanzfrequenzen gleichzeitig. Dadurch ergibt sich für den Anwender die Möglichkeit unterschiedliche Sensoren mit einer gemeinsamen induktiven Übertragungsstrecke in einem Gehäuse zu vereinen. Das Ausschwingen des LC-Schwingkreises in der Übertragungseinrichtung AE ist dabei von untergeordneter Bedeutung, da es innerhalb weniger Perioden abgeklungen ist, während das Ausschwingen des Sensorschwingers in dem Körper K eine Vielzahl an Perioden anhält und bequem ausgewertet werden kann. Die eigentliche Kenn- oder Messgröße wird aus der Auswertung von Resonanzfrequenz und Dämpfung bestimmt oder auch wie oben beschrieben aus der Fläche unterhalb der Ausschwingkurve.

Wie in Fig. 5 skizziert, werden wie bei der für sich bekannten RFID-Technologie (RFID: Hochfrequenz-Identifikation) in der Übertragungseinrichtung UE als einem Lesegerät von der Spannungsquelle G Anregefrequenzen bzw. Frequenzanteile fd und fT z. B. bei 32 kHz und bei 33 kHz generiert, verstärkt und über die induktive Kopplung bestehend aus der Spule als der Antenne A3 mit einem vorgeschalteten Anpassungsnetzwerk ausgesendet. Diese Trägerfrequenzen werden über die Antenne A1 und eine Spule als der Antenne A1 im Körper K mit einem parallel geschalteten Kondensator C1 als Schwingkreis berührungslos an die Sensoreinrichtung S bzw. an dessen Schallwandler SW und den Temperatursensor TS übertragen.

Während sich der Temperatursensor TS mit einem Anregungssignal bei einem ersten Frequenzanteil fT anregen lässt und daraufhin mit einem eher temperaturabhängigen Signal sT ausschwingt kann der eher druckabhängige Schwinger SW mit einem Anregungssignal bei einem zweiten Frequenzanteil fa2 angeregt werden und schwingt mit einem eher druckabhängigen Signal sd aus. Ein solch diskretes Ansprechverhalten ist insbesondere möglich, wenn die beiden Schwinger auf unterschiedlichen Resonanzfrequenzen innerhalb der Übertragungsfunktion der drahtlosen Kopplung arbeiten.

Gemäß Fig. 4 wird eine Spannung eines vom Lesegerät ausgehenden Wechselfeldes mit einer Frequenz von z. B. 13,56 MHz gleichgerichtet und über einen Pufferspeicher in Form einer Gleichspannung zur Spannungsversorgung auch des Mikrokontrollers bzw. Prozessors CC verwendet. Der Prozessor CC kann wiederum mit Hilfe eines Schaltelementes, z.B. Transistors, den Schwingkreis mit einer vorprogrammierten Sequenz kurzschließen und damit eine Modulation der Modulationsfrequenz des Schwingers z. B. 32,786 kHz auf der Trägerfrequenz von z. B. 13,56 MHz erzeugen. In dieser Sequenz lassen sich diverse Informationen, z. B. eine Identifikationsnummer des Sensors S, Kalibrationsdaten oder Online-Messdaten, kodieren.

Als Taktgeber für eine daraus gebildete digitale Sequenzfolge dient z.B. ein druck- und temperaturempfindlicher Schwinger, z. B. Uhrenquarz mit beispielsweise 32,768 kHz. Somit beinhaltet die Modulation bedingt durch die Veränderung der Resonanzfrequenz des Taktgebers neben der digitalen Informationssequenz zusätzlich analoge Druck- und Temperaturinformationen.

Während das Lesegerät bei einer einfachen Variante, insbesondere hochtemperaturfesten Variante ohne Halbleiter, den Sensor mit einer Frequenz kurz angeregt und dann im nächsten Moment lauscht, werden hier bevorzugt zwei unterschiedliche Frequenzbänder genutzt. Insbesondere wird für jede Messgröße ein anderer Schwinger vorgesehen. Die hohe Trägerfrequenz übermittelt permanent Energie an den Sensor während die niedrigere Modulationsfrequenz kontinuierlich ausgelesen werden kann. Zusätzlich zur Resonanzfrequenz des Schwingquarzes lassen sich durch den eingebauten Prozessor CC auch wesentliche komplexere Informationen übertragen.

Aufgrund der induktiven Rückkopplung lässt sich eine solche Modulation des Sensors S auch in der Spule bzw. Antenne A3 der Übertragungseinrichtung UE beobachten. Zur Auswertung können die Schwingungen auf der Primärspule demoduliert, gefiltert und anschließend verstärkt werden. Mit Hilfe eines getakteten AD-Wandlers lässt sich anschließend eine digitale Dekodierung der aufmodulierten Sequenz vornehmen. Die Ermittlung der Modulationsfrequenz wird durch eine Maximumsuche im Frequenzbereich des abgetasteten Zeitsignals erreicht. Um während der Signalverarbeitung Diskretisierungsfehler zu verringern, kann vorteilhaft ein sogenanntes Zero-Padding vor einer schnellen Fouriertransformation (FFT) oder eine sogenannte Zoom-FFT und einer Polynomapproximation nach der Maximumsuche durchgeführt werden. Für den Taktgeber des AD-Wandlers sollte dabei ein hochgenaues Zeitnormal gewählt werden, um auch kleinste Frequenzänderungen der Modulationsfrequenz fehlerfrei Auflösen zu können. Da handelsübliche Uhrenquarze eine Druckempfindlichkeit von etwa 300 ppb pro mbar besitzen ist für das Zeitnormal eine Genauigkeit von vorzugsweise mindestens 30 ppb vorzusehen, was mit einer entsprechend genauen Zeitreferenz wie z. B. einem temperaturstabilen Schwingquarz realisiert werden kann.

Fig. 7 zeigt eine beispielhafte Stimmgabelquarzanordnung, welche innerhalb des Körpers am Sensor einsetzbar ist. Diese umfasst insbesondere ein Gehäuse R1 mit einer Durchführungsöffnung für Schallwelle R2, Elektroden, um diesen an eine Schaltung anschließen zu können, und den eigentlichen Stimmgabelquarz R4. Der Einsatz ist besonders Vorteilhaft wegen des gleichzeitigen Nutzens des druck- und temperaturabhängigen Stimmgabelquarzes R4 sowohl als Taktgeber für den Prozessor CC als auch als Basis für eine Modulationsfrequenz für die Rückübertragung aus dem Körper K heraus.

Beispielhafte Unterschiede zwischen den Ausgestaltungen der Fig. 1 und 4, d.h. eines LC-Schwingkreises (LC: Spule-Kapazität) mit parallelgeschaltetem Messquarz und des Einsatzes eines Prozessors zeigt nachfolgende Tabelle, in welcher insbesondere Zahlenangaben lediglich beispielhaft - ohne Beschränkung auf auch sonstige Wertebereiche - sind und ersten Versuchen entnommen sind:

|  | Anordnung nach Fig. 1 | Anordnung nach Fig. 4 |
|---|---|---|
| Funktionsprinzip | Stimmgabelquarz wird über LC-Schwingkreis kurz angeregt um dessen Resonanzfrequenz im Antwortsignal zu messen. | Oszillatorschaltung wird mit Energie aus einem induktiv gespeisten LC-Schwingkreis versorgt. Die Resonanzfrequenz der Oszillatorschaltung wird auf den energieversorgenden Schwingkreis moduliert. |
| Anregung | Sensorausführung mit direkter diskontinuierlicher Anregung | Sensorausführung mit indirekter kontinuierlicher Anregung |
| Trägerfrequenz | 32 kHz (Resonanzfrequenz des Schwingers) | 13,56 MHz (theoretisch beliebig) |
| Modulationsfrequenz | Keine, da direkte Übertragung | 32 kHz (Resonanzfrequenz des Schwingers) |
| Kopplung | hohe Induktivität (ca. 500 Windungen) | Induktivität von etwa 200 nH (ca. 12 Windungen) |
| Wärmeleitfähigkeit | hoch, wegen großer Spule | niedrig, wegen kleiner Spule |
|  | Anordnung nach Fig. 1 | Anordnung nach Fig. 4 |
| Empfindlichkeit gegenüber Versorgungsspa nnungsschwanku ngen | direkter Einfluss über anregende Spannung (ca. ±1 ppm) | vernachlässigbar, da Spannungsstabilisieru ng im energieversorgenden Teil stattfindet |
| Empfindlichkeit gegenüber parasitären Kapazitäten | direkter Einfluss da offener Schwingkreis (ca. ±50 ppm) | vernachlässigbar, da geschlossener Schwingkreis |
| Empfindlichkeit gegenüber Temperaturänderungen am Drucksensor | direkter Einfluss auf den Stimmgabelquarz (ca. ±50 ppm über dem Betriebstemperaturber eich) | direkter Einfluss auf Oszillatorschaltung (ca. 80 ppm über dem Betriebstemperaturber eich) |
| Erweiterbarkeit | mit Messquarzen (für z. B. Temperatur, Feuchtigkeit, Beschleunigung) anderer Nominalfrequenzen | mit diversen Messgrößenwandlern (entsprechend den Möglichkeiten des Mikrokontrollers) |
| Identifikation | über die Resonanzfrequenz der Schwinger | beliebige Identifikationsnummernvergabe möglich |
| Anzahl elektronischer Komponenten | 3-5 | ca. 15 |
| Temperaturbeständigkeit | begrenzt durch Schwingquarz (ca. 200°C) | begrenzt durch Halbleiterelemente (ca. 80°C) |
| Kalibrierung | Zwingend notwendig, | Zwingend notwendig, |
|  | Kalibrierdaten benötigen eine Datenbank | Kalibrierdaten können auch im Sensor gespeichert werden |

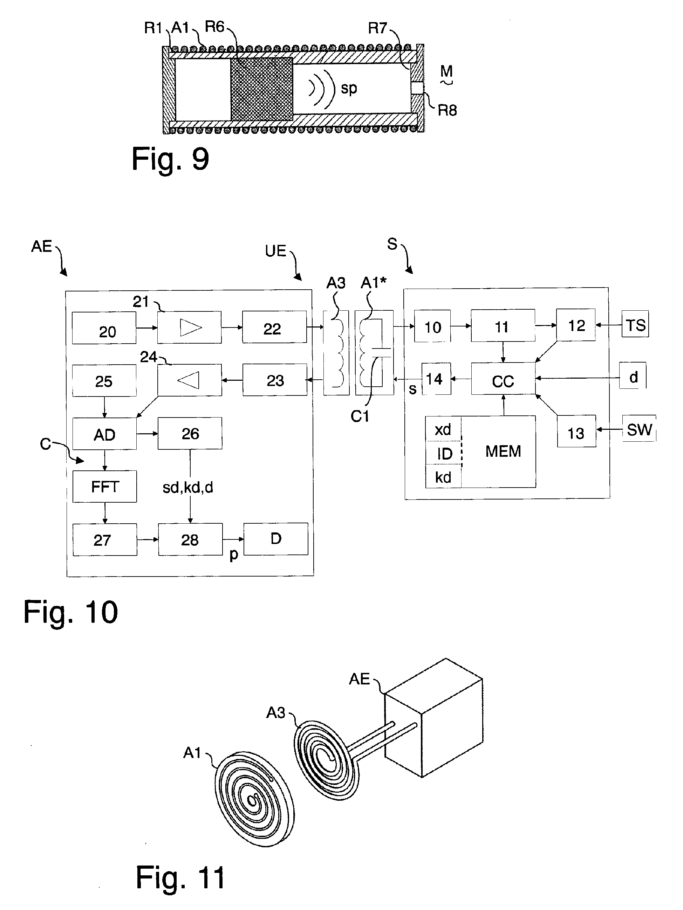

Ohne Beschränkung der Verwendung spezieller Sensorquarze und Sensoranordnungen werden bestimmte Piezoschwingeranordnungen besonders bevorzugt. Dazu gehören insbesondere Stimmgabelquarze gemäß Fig. 7, welche aus Uhren als Taktgeber für sich genommen bekannt sind, Membranschwinger gemäß Fig. 8, welche für sich genommen vorwiegend in Summern als hörbare Signalgeber eingesetzt werden, und offene Ultraschallwandler gemäß Fig. 9, welche für sich genommen vorwiegend zu Abstandsmessungen eingesetzt werden.

Fig. 8 zeigt einen Sensor in einer tablettenförmigen Geometrie, wobei eine Induktionsspule als Antenne A1 den äußeren Umfang begrenzt, während die restlichen elektronischen Komponenten, z.B. eine kapazitive Komponente und ein piezoakustischer Schwinger, im Inneren des Gehäuses R1 untergebracht sind. Diese Anordnung erscheint vorteilhaft für insbesondere die Verwendung von Schwingquarzen oder Membranschwingern. Insbesondere bei der Verwendung eines Membranschwingers wird vorgeschlagen, ein Gehäusevolumen bzw. den Innenraum und die Gehäuseöffnung als der Durchführungsöffnung R2 für die Schallwelle sp entsprechend eines Helmholzresonators auszuführen, um den Messeffekt durch die Bewegungsresonanz der Luftmasse zu verstärken oder um weitere Resonanzpeaks zu erzeugen, welche mit in der Auswertung berücksichtigt zusätzliche Informationen über den Zustand des Gases liefern können. Insbesondere ist eine der elastischen Elektroden R3 flächig zwischen den Gehäusewandungen des Gehäuses R1 gelagert, während daran und nicht zur Gehäusewandung reichend der flächige Schallwandler SW und diesem folgend die zweite Elektrode R3 angeordnet ist.

Ein solcher Membranschwinger kann zwar mit einem einseitigen Referenzdruck betrieben werden, was ihn empfindlicher macht, kommt vorteilhaft aber auch ohne Referenzdruck zurecht. Ein Einbau des piezoakustischen Membranschwingers in einen Helmholzresonator dient somit besonders vorteilhaft zur Verstärkung des Messeffektes und zur Erzeugung zusätzlicher Resonanzpeaks (deutsch: Resonanzspitzenwerts).

Fig. 9 zeigt einen offenen Ultraschallwandler, welcher ebenfalls als Sensoreinrichtung S im Körper K einsetzbar ist und als eine längliche zylinderförmige Gehäusegeometrie ausgebildet ist. Auch bei dieser Gehäuseform sind die Wicklungen der Überträgerspule als der Antenne A1 auf dem Umfang des Gehäuses R1 angebracht. Eine abstimmende kapazitive Komponente und der Ultraschallwandler R6 sind im Inneren des Gehäuses R1 untergebracht, wobei der Ultraschallwandler R6 in einem definierten Abstand zu einer festgelegten Reflexionsgeometrie R7 befestigt ist. Als Reflexionsgeometrie R7 dient beispielsweise eine gegenüberliegende Wandung, in welcher sich eine Durchführungsöffnung R8 für das Medium außerhalb des Gehäuses R1 befindet und welche in den anderen Ausgestaltungen ähnlich der Durchführungsöffnung R2 für die Schallwelle ausgestaltet sein kann. Zur Gewinnung der Messgröße wird vorteilhaft vorgeschlagen, das aufgrund einer Schallwelle entstehende Echoprofil mit seinen Kenngrößen, insbesondere Zeitdauer bis zur Reflektion, Intensität des Echopeaks (deutsch: Echospitzenwerts), Energiegehalt der reflektierten Welle, auszuwerten. Die thermodynamischen Zustandsänderungen wirken sich auf die Kenngrößen des akustischen Schallfeldes aus und schlagen sich dementsprechend auch im Echoprofil nieder. Vorteilhaft ist in einem Körper K auch ein Einbau dieses piezoakustischen Schwingers gegenüber einer reflektierenden Geometrie und der zusätzlichen Auswertung des Echoprofils.

Fig. 10 zeigt eine komplexere, aber rein beispielhafte Schaltungsanordnung für die Auswerteeinrichtung AE mit der Übertragungseinrichtung UE und für Komponenten im Körper bzw. in dessen Sensor S. Der Sensor S ist z.B. mit Halbleitertechnologie ausgestattet und wird mit einer und einer Trägerfrequenz von beispielsweise 13,56 MHz getrieben. Statt einem Messquarz nach Fig. 1 wird in dieser Variante wie im Fall der Fig. 4 ein Mikrocontroller bzw. Prozessor CC vom LC-Schwingkreis (LC: Induktions-Kapazität) gespeist. Der Prozessor CC nutzt dann jedoch einen Messquarz als Taktgeber 13 für seine Operationen. Die Taktfrequenz ist wiederum durch die Modulation vom Lesegerät bzw. von der Übertragungseinrichtung UE aus sichtbar.

Der Schwingkreis mit der Antenne A1 und dem Kondensator C1 ist in dem Sensor S an einem Gleichrichter 10 für hereinkommende Signale bzw. an einem Modulator 14 für herausgehende Übertragungssignale s angeschlossen. Über den Gleichrichter 10 eingespeiste Energie kann in einem Energiespeicher 11 gespeichert werden. Der Energiespeicher 11 versorgt den Prozessor CC und einen Wandler 12, an dem z.B. der Temperatursensor TS angeschlossen ist. Der Schallwandler SW ist über den Taktgeber 13 an den Prozessor CC gekoppelt. Außerdem können über einen beispielhaften weiteren Sensor sonstige Messdaten d ermittelt werden. Von dem Temperatursensor TS empfangene Temperaturdaten, sonstige Messdaten d und vom Schallwandler SW bereitgestellte Kenngrößen werden dem Prozessor CC direkt oder ggf. vorverarbeitet angelegt und von diesem dem Modulator 14 zur Übertragung über die Antenne A1* angelegt. Außerdem kann der Prozessor CC auf in einer Speichereinrichtung MEM gespeicherte Daten, z.B. Kalibrationsdaten kd für diesen Sensor S, eine Identifikationskennung ID oder sonstige Sensordaten xd zugreifen. Diese können im Prozessor CC mit verarbeitet und/oder zur Auswerteeinrichtung AE mit dem Übertragungssignal s übertragen werden.

Die Auswerteeinrichtung AE weist einen Oszillator 20 auf, der eine Trägerfrequenz bereitstellt und diese über einen Operationsverstärker 21 einem Anpassungsnetz 22 anlegt. An das Anpassungsnetz 22 als Ausgangskomponente zur Energieübertragung und an einen Demodulator und Filter 23 zum Datenempfang ist die Antenne A3 gekoppelt. Empfangene Daten bzw. das Übertragungssignal s werden nach Durchführung durch den Demodulator und Filter 23 über einen Operationsverstärker 24 an einen Analog-Digital-Wandler AD angelegt und von diesem abgetastet. Dem Analog-Digital-Wandler AD liegt auch eine Referenzfrequenz eines Oszillators 25 an. Der Analog-Digital-Wandler AD legt sein Ausgangssignal einem Fouriertransformator FFT und einem Dekodierer 26 an, die beide, wie auch die weiteren Komponenten Bestandteil des Prozessors C sein können. Ergebnis der Fouriertransformation ist eine Taktfrequenz des Sensors, welche zur Umrechnung von Daten des Dekodierers 26 einsetzbar ist. Der Dekodierer 26 bestimmt insbesondere Sensordaten, wie die Kenngröße sd, Kalibrationsdaten kd und sonstige Messdaten d, welche mit dem Übertragungssignal s übertragen wurden. Daraus wird dann z.B. der Druck p berechnet.

Ermöglicht wird insbesondere eine Druckbestimmung aus der Resonanzfrequenz. Um die Verstimmung der Resonanzfrequenz durch den Druck p vom Temperatureinfluss der im Körper K herrschenden Temperatur T zu trennen, können insbesondere sowohl die separate Temperaturmessung als auch die Kalibrationsdaten kd herangezogen werden. Eine Kalibrationsmessung sollte die Resonanzfrequenz des Oszillators über dem Temperaturverlauf bei konstantem Druck und die Resonanzfrequenz des Oszillators über dem Druckverlauf bei konstanter Temperatur T erfassen. Die approximierten Verläufe können dann mit Polynomfaktoren als die Kalibrationsdaten kd in einer Speichereinrichtung MEM des Sensors S hinterlegt werden. Die Umrechnung erfolgt insbesondere unter der Annahme, dass sich die Resonanzfrequenz des Oszillators aus der Nominalfrequenz, einer temperaturabhängigen Verstimmung und einer druckabhängigen Verstimmung zusammensetzt. Während sich die Nominalfrequenz bei konstantem Druck p und konstanter Temperatur T willkürlich über einen gemessenen Wert festlegen lässt, kann die temperaturabhängige Verstimmung aus der gemessenen Temperatur T im Sensorinneren und aus den vorhergehenden Kalibrationsmessungen ermittelt werden. Im Anschluss lässt sich der resultierenden druckabhängigen Verstimmung aus der zweiten Kalibrationsmessung ein eindeutiger Druckwert zuordnen.

Fig. 11 zeigt eine alternative beispielhafte Antennenausgestaltung mit spiralförmigen Antennen A1, A3, welche ebenfalls raumsparend im Körper anordbar sind.

Bezugszeichenliste:

| | |
|---|---|
| A1-A3, A1* | Antennen |
| AD | Analog-Digital-Wandler |
| AE | Auswerteeinrichtung |
| C | Prozessor |
| CC | Prozessor im Körper |
| C1,C2 | Kondensatoren |
| d | sonstige Messdaten |
| ES,ES2; ES* | Empfänger- und/oder Sendereinrichtung |
| fd | Frequenzanteile der durch die Schallwelle sp erzeugten Kenngröße |
| fT | Frequenzanteile der durch die Temperatur T erzeugten Kenngröße |
| FFT | Fouriertransformator |
| G | Spannungsquelle, insbesondere Rechteck-Wechselspannungsquelle |
| kd | Kalibrationsdaten |
| K | Körper, insbesondere Isolierkörper |
| K1 | mit Glasfaser verstärkte Kunststoffhülle |
| K2, K4 | Polyethylenhülle |
| K3 | Aluminiumhülle |
| K5 | permeable, poröse Kieselsäurefüllung |
| K6 | Innenraum |
| M | Medium |
| MEM | Speichereinrichtung |
| OS | Oszilloskop |
| p | Druck |
| R; R* | Resonator |
| RR | Resonatorraum |
| R1 | Gehäuse |
| R2 | Durchführungsöffnung für Schallwelle |
| R3 | Elektroden |
| R4 | Stimmgabelquarz |
| R6 | Ultraschallwandler |
| R7 | Reflektionsgeometrie |
| R8 | Durchführungsöffnung |
| s | Übertragungssignale |
| sa | Anregungssignal, insbesondere Rechtsignal |
| sd | durch die Schallwelle sp erzeugte Kenngröße |
| sd* | Abklingkurve einer Schwingung des Schallwandlers SW aufgrund des Schallfeldes/der Schallwelle |
| sm,sm* | Übertragungssignal |
| sp | Schallwelle oder Schallfeld |
| sT | durch die Temperatur T erzeugte Kenngröße |
| S | Sensor |
| SE | Empfänger- und/oder Sendereinrichtung, insbesondere Antenne, im Körper |
| SW | Schallwandler |
| T | Temperatur |

| TS | Temperatursensor |
|---|---|
| üA | Übertragungsfunktion der induktiven Kopplung |
| UE | Übertragungseinrichtung |
| Va | Anregevolumen des Resonators |
| xd | sonstige Sensordaten |

| 10 | Gleichrichter |
|---|---|
| 11 | Energiespeicher |
| 12 | Wandler |
| 13 | Taktgeber |
| 14 | Modulator |

| 20 | Oszillator |
|---|---|
| 21 | Operationsverstärker |
| 22 | Anpassungsnetz |
| 23 | Demodulator und Filter |
| 24 | Operationsverstärker |
| 25 | Oszillator |
| 26 | Dekodierer |

| λ | Wärmeleitfähigkeit |
|---|---|

**Patentansprüche**

1.  Messsystem zur Messung einer thermodynamischen Zustandsgröße - insbesondere einer Wärmeleitfähigkeit, einer Temperatur (T), eines Drucks (p) oder einer Dichte - oder zur Messung einer Viskosität eines gasförmigen oder flüssigen Mediums (M) innerhalb eines das Medium (M) abdichtend umschließenden Körpers (K), aufweisend

    - im, insbesondere innerhalb des Körpers (K) angeordnet zumindest eine Empfänger- und/oder Sendereinrichtung (ES) mit einer Antenne (A1) zum induktiven Einkoppeln eines drahtlos empfangenen Anregungssignals (sa),
    - im, insbesondere innerhalb des Körpers (K) angeordnet zumindest einen elektromechanischen Schwinger und/oder Resonator als Schallwandler (SW) - insbesondere eine Piezoelementanordnung - der an der Empfänger- und/oder Sendereinrichtung (ES) zum Empfang eines solchen Anregungssignals (sa) aus der Empfänger- und/oder Sendereinrichtung (SE) angekoppelt ist und der ausgebildet ist, nach Empfang eines solchen Anregungssignals (sa) eine Schallwelle (sp) - insbesondere eine Ultraschallwelle - in das Medium (M) einzukoppeln,
    - zumindest den einen Schallwandler (SW) oder innerhalb des Körpers (K) angeordnet einen weiteren Schallwandler, der ausgebildet ist, zumindest eine durch die Schallwelle (sp) erzeugte Kenngröße (sd) zu erfassen und ein von der erfassten Kenngröße (sd) abhängiges Übertragungssignal (sm(sd)) der Empfänger- und/oder Sendereinrichtung (ES) zum drahtlosen Aussenden anzulegen,
    - eine Auswerteeinrichtung (AE), welche zumindest eine Empfängereinrichtung - insbesondere eine Sende- und Empfängereinrichtung (SE) - mit einer Auswerteeinrichtungs-Antenne (A3) zum drahtlosen Empfang eines solchen Übertragungssignals (sm(sd,sT)) und einen Prozessor (C) aufweist, wobei der Prozessor (C) aus dem empfangenen Übertragungssignal (sm(sd, sT)) die thermodynamische Zustandsgröße oder die Viskosität des Mediums (M) bestimmt.

2.  Körper eines Messsystems oder Messsystem nach Anspruch 1 mit innerhalb des Körpers (K) angeordnet zusätzlich einem Temperatursensor (TS), der ausgebildet ist, eine/die Temperatur (T) des Mediums (M) als weitere Kenngröße (sT) zu erfassen und die erfasste Temperatur (T) als Bestandteil des Übertragungssignals (sm(sd,sT)) oder eines weiteren Übertragungssignals (sm*(sT)) der oder einer weiteren Empfänger- und/oder Sendereinrichtung (ES; ES2) zum drahtlosen Aussenden anzulegen.

3.  Körper eines Messsystems oder Messsystem nach Anspruch 1 oder 2 mit

    - im, insbesondere innerhalb des Körpers (K) angeordnet zusätzlich einem Temperatursensor (TS), der ausgebildet ist, eine Temperatur (T) des Mediums (M) als weitere Kenngröße (sT) zu erfassen und

- im, insbesondere innerhalb des Körpers (K) angeordnet einem Prozessor (CC), der zwischen einerseits dem oder dem weiteren Schallwandler (SW) und dem Temperatursensor (ST) und andererseits der Empfänger- und/oder Sendereinrichtung (ES) eingesetzt ist und ausgebildet ist, das Übertragungssignal (sm(sd,sT)) aus der um einen Temperatureinfluss korrigierten erfassten Kenngröße (sd) zu bilden und der Empfänger-und/oder Sendereinrichtung (ES) anzulegen.

4. Körper eines Messsystems oder Messsystem nach einem vorstehenden Anspruch mit im, insbesondere innerhalb des Körpers (K) angeordnet einem/dem Prozessor (CC), der zwischen einerseits zumindest dem oder dem weiteren Schallwandler (SW) und optional zusätzlichen Komponenten und andererseits der Empfänger- und/oder Sendereinrichtung (ES) eingesetzt ist und ausgebildet ist, entweder das Übertragungssignal (sm(sd,sT)) aus der zumindest einen erfassten Kenngröße (sd,sT) und zusätzlich zumindest einem lokal gespeicherten Parameter (ID, kd) zu erzeugen oder das Übertragungssignal (sm(sd,sT)) aus der zumindest einen erfassten und durch den Prozessor verarbeiteten Kenngröße (sd,sT) und optional zumindest einem zusätzlich lokal gespeicherten Parameter (ID, kd) zu erzeugen und das Übertragungssignal (sm(sd,sT)) der Empfänger-und/oder Sendereinrichtung (SE) anzulegen.

5. Körper eines Messsystems oder Messsystem nach Anspruch 4 mit im, insbesondere innerhalb des Körpers (K) angeordnet einer Speichereinrichtung (M), in welcher als zumindest ein gespeicherter Parameter einer oder mehrere Korrekturwerte, insbesondere Temperaturkorrekturwerte, Kalibrationsdaten (kd), eine Identifikationsnummer (ID) und/oder sonstige Sensordaten auslesbar gespeichert sind.

6. Körper eines Messsystems oder Messsystem nach Anspruch 4 oder 5, wobei zumindest ein solcher elektromechanischer Schallwandler (SW) mit dem Prozessor (CC) derart verschaltet ist, dass eine Schwingfrequenz des elektromechanischen Schallwandlers (SW) als Taktgeber einen Takt an den Prozessor (CC) anlegt.

7. Messsystem nach Anspruch 6, wobei eine Taktinformation, insbesondere Taktfrequenz, des Takts beim Aussenden des Übertragungssignals (sm(sd)) mit an die Auswerteeinrichtung (AE) übertragen wird und die Auswerteeinrichtung (AE) ausgelegt ist, die Taktinformation auszuwerten und/oder auszugeben.

8. Körper eines Messsystems oder Messsystem nach einem vorstehenden Anspruch, bei dem der Schallwandler (SW) als ein Stimmgabelquarz ausgebildet ist und insbesondere die Auswerteeinrichtung (AE) und/oder der Prozessor (C) an ein hochgenaues Zeitnormal gekoppelt ist mit einer Zeitstabilität höher als der des Stimmgabelquarzes.

9. Körper eines Messsystems oder Messsystem nach einem vorstehenden Anspruch, wobei der als akustischer Resonator (R) ausgebildete Schallwandler (SW) als Helmholzresonator ausgebildet ist.

10. Körper eines Messsystems oder Messsystem nach einem vorstehenden Anspruch, bei dem die zumindest eine Antenne (A1) der Empfänger- und/oder Sendereinrichtung (ES) um den Schallwandler (SW) und / oder um mit dem Schallwandler (SW) innerhalb des Körpers (K) verbundene Komponenten gewickelt ist.

11. Körper eines Messsystems oder in einem Messsystem nach einem vorstehenden Anspruch, wobei der Körper (K) als ein Isolierkörper eines Verbund-Isolier-Systems im Innenraum ein vakuumisiertes Kieselsäuregemisch aufweist, das von einer metallisierten Schicht, insbesondere metallisierten Polyethylen-Folie umschlossen ist.

Fig. 1

Abklingkurven für einen Innendruck
von 110 bis 1000 mbar

Fig. 2

Fig. 3

Fig. 4

sd*

D    p=500

üA
fd
fT

C

K

K1  K2  K3  K4  K5  K6    R    A1*              ES*              s      UE

M, p,T, λ

sp

SW  CC  TS

S

A3  C

sm(sd,sT)

S                    AE

SW  TS  C1  A1  A3  C2  OS  G

Fig. 5

Spannung [V]

5
0
-5
5
0
-5

-0.005  0  0.005    0.015    0.025

Zeit [Sek.]

Fig. 6

R1  R2

R4

R3

Fig. 7

R1          R2          sp

R3

A1                    R3    SW

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007027466